(19) **Europäisches Patentamt**

**European Patent Office**

**Office européen des brevets**

(11) **EP 1 067 567 A1**

(12) **EUROPEAN PATENT APPLICATION**
published in accordance with Art. 158(3) EPC

(43) Date of publication:
**10.01.2001 Bulletin 2001/02**

(51) Int. Cl.$^7$: **H01F 41/02**, H01F 3/04, G01R 33/02

(21) Application number: **00900918.4**

(22) Date of filing: **25.01.2000**

(86) International application number:
**PCT/JP00/00352**

(87) International publication number:
**WO 00/45400 (03.08.2000 Gazette 2000/31)**

(84) Designated Contracting States:
**AT BE CH CY DE DK ES FI FR GB GR IE IT LI LU MC NL PT SE**

(30) Priority: **26.01.1999 JP 1643799**

(71) Applicants:
• **HITACHI METALS, LTD.**
**Minato.ku, Tokyo 105-8614 (JP)**
• **HITACHI FERRITE ELECTRONICS LTD.**
**Tottori 689-11 (JP)**

(72) Inventors:
• **NITANDA, Fumio**
**Fukaya-shi, Saitama 366-0054 (JP)**
• **ARAKAWA, Syunsuke**
**Kumagaya-shi, Saitama 360-0841 (JP)**
• **KOTANI, Tadashi**
**Tottori-shi, Tottori 680-0824 (JP)**

(74) Representative:
**Strehl Schübel-Hopf & Partner**
**Maximilianstrasse 54**
**80538 München (DE)**

(54) **DISKETTE TYPE MEMORY CARD ADAPTER, MAGNETIC SENSOR THEREFOR MAGNETIC CORE, METHOD FOR MANUFACTURING THE MAGNETIC CORE**

(57)   A magnetic core used in a magnetic sensor of a diskette type memory card adapter is manufactured by laminating a plurality of rapidly solidified alloy sheets and by punching the alloy laminate. This lamination is carried out with a hot-melt adhesive. A heat treatment is made at a temperature of 180 to 220 °C before the punching, or at a temperature of 180 to 540 °C after the punching. The direction of the length of the magnetic gap of the magnetic core is perpendicular to the direction of magnetic anisotropy of the sheets.

Fig. 17(b)

Fig. 17(a)

**Description**

FIELD OF THE INVENTION

The present invention relates to a floppy disk-type adapter for receiving and transmitting data of various memory cards to and from a floppy disk drive of a computer, a magnetic sensor mounted to the floppy disk-type adapter and a magnetic core used for the magnetic sensor, and a method for producing such a magnetic core.

PRIOR ART

Portable digital devices such as digital cameras comprise small flash memory cards for storing data. To transmit data in the memory card to a computer, a PC card adapter equipped with a memory card is inserted into a PC card slot of the computer.

PC card slots are provided to notebook personal computers as standard accessories, but not to desktop personal computers. Thus, the transmission of data from portable digital devices to desktop personal computers should be carried out by connecting them via interface cables, needing troublesome job.

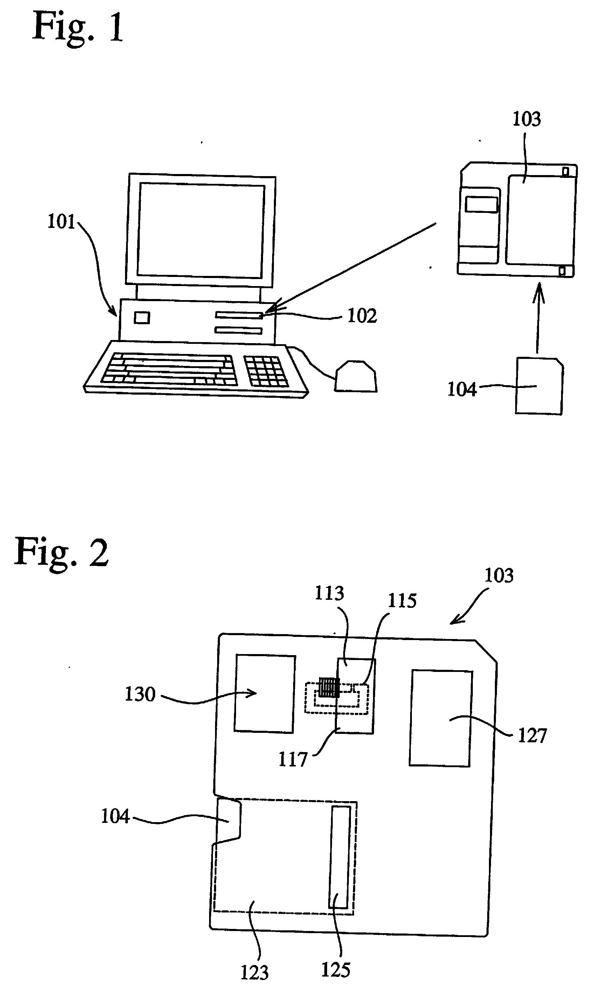

Developed to solve the above problem is, as shown in Fig. 1, a combination of a 3.5-inch floppy disk drive (FDD) 102 mounted to a notebook or desktop personal computer 101 as a standard accessory and a floppy disk-type (diskette-type) adapter (FD-type adapter) 103, and it has been and put into practical use. FDD 102 reads from and writes on a floppy disk data of a computer as magnetic information by a read/write head (R/W head). The FD-type memory card adapter 103 can conduct data transmission between the memory card 104 and the computer 101 by utilizing the reading and writing of magnetic information with a R/W head of FDD 102.

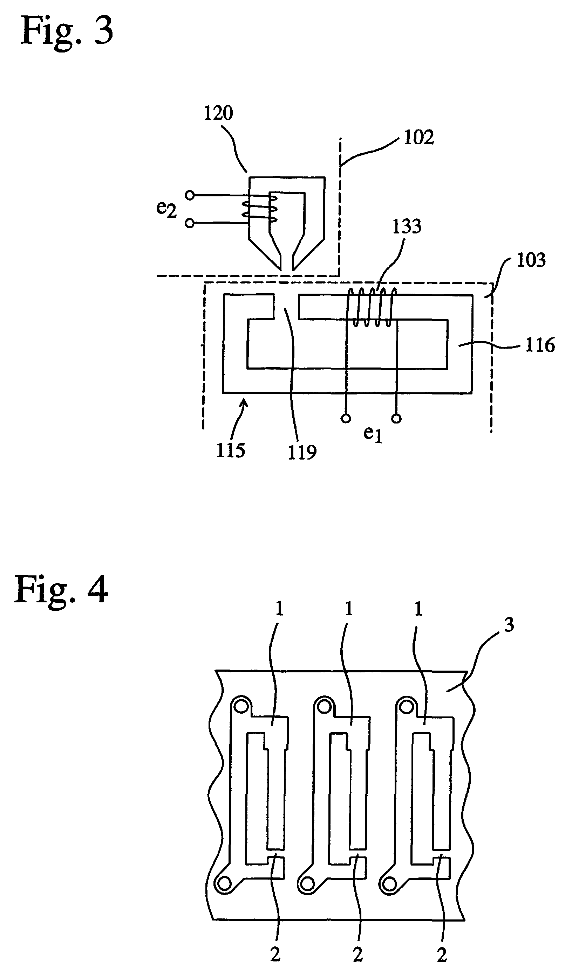

One example of such a diskette-type memory card adapter 103 is shown in Fig. 2, and a system using it is shown in Fig. 3. The diskette-type memory card adapter 103 can supply data to or receive them from a magnetic head of a floppy disk drive 102, when inserted into the floppy disk drive 102 of a computer 101. This diskette-type memory card adapter 103 has in one end of its case an opening 113 for receiving a magnetic head of the floppy disk drive 102, which is covered by a non-magnetic sheet 117. Mounted inside the opening 113 is a magnetic sensor 115, and a magnetic gap 119 of the magnetic sensor 115 is positioned opposite the magnetic head 120 of the floppy disk drive 102. Though the diskette-type memory card adapter 103 shown in the figure is the same in size as a 3.5-inch floppy disk, it is clear that diskettes having different sizes from the above may also be utilized.

The memory card adapter 103 is provided with a slot 123 for receiving a memory card 104 having magnetic stripes such as IC cards, magnetic cards, etc., and terminals 125 for supplying or receiving information to or from the memory card 104 are provided inside the slot 123. The memory card adapter 103 is also provided with CPU 127 for treating information obtained from the magnetic sensor 115, a battery 130 for driving CPU 127, and an amplifier circuit (not shown) for amplifying information obtained from the memory card 104.

The transmission of data of the memory card 104 using an FD-type adapter 103 will be explained referring to Fig. 3. Data in the memory card 104 attached to the FD-type adapter 103 flow as an electric signal into a coil 133 wound around a magnetic core 116 having a magnetic gap 119. The coil 133 then generates magnetic flux in the magnetic core 116, which leaks from the magnetic gap 119. The leaked magnetic flux is converted to an electric signal by a R/W head 120 of FDD 102 positioned close to the magnetic gap 119, and then sent to a computer 101.

Because the above memory card adapter 103 of a 3.5-inch diskette type has an overall dimension of 90 mm x 90 mm x 3 mm, the magnetic sensor 115 contained in this adapter should meet the following conditions: (a) it is so thin that it can easily be received in the above space as thin as 3 mm or less; (b) it has sufficient detection characteristics in an operation frequency band of 250 kHz or more; (c) it has high reliability with characteristics less susceptible to change with time; and (d) it is suitable for mass production, etc.

A magnetic core of a magnetic sensor contained in such a memory card adapter of a 3.5-inch diskette type is now made of Permalloy from the viewpoint of magnetic properties and workability. However, because the magnetic core made of Permalloy is poor in a conversion efficiency of electric energy to and from magnetic energy, it provides only a low magnetic information level, resulting in erroneous operation and the stop of data transmission.

Though it may be contemplated to improve the conversion efficiency of a magnetic sensor by increasing the thickness of a magnetic core made of Permalloy, sufficient improvement in conversion efficiency cannot be achieved under the condition that the memory card adapter should have an overall dimension as thin as 3 mm. Also, the conversion efficiency may be supplemented by increasing the gain of an amplifier circuit. This means, however, results in a complicated amplifier circuit, an enlarged circuit pattern, increase in the number of steps of assembling a memory card adapter, and increase in consumed electric power, causing problems of increasing the production and operation cost of the memory card adapter.

EP 1 067 567 A1

OBJECT OF THE INVENTION

Accordingly, an object of the present invention is to provide a thin magnetic sensor excellent in an energy conversion efficiency, a magnetic core used therefor, a method for producing such a magnetic core, and a diskette-type memory card adapter equipped with such a magnetic sensor.

DISCLOSURE OF THE INVENTION

The magnetic core suitable for use in a magnetic sensor for a diskette-type memory card adapter according to one embodiment of the present invention is obtained by punching a laminate of a plurality of rapidly solidified, thin alloy sheets.
When a plurality of rapidly solidified, thin alloy sheets are subjected to a heat treatment before punching, the heat treatment temperature is preferably 180-220° C. Also, when a heat treatment is carried out after punching the rapidly solidified, thin alloy sheets, the heat treatment temperature is preferably 180-540°C.
The magnetic core according to another embodiment of the present invention is constituted by at least one rapidly solidified, thin alloy sheet, having a magnetic gap whose longitudinal direction crosses a magnetic anisotropy direction of the thin sheet. It is particularly preferable that the longitudinal direction of the magnetic gap is substantially in parallel with the width direction of a rapidly solidified, thin alloy ribbon.
In a preferred embodiment of the present invention, when a plurality of curved, rapidly solidified, thin alloy sheets are laminated with an adhesive to form a magnetic core, the thin sheets are laminated such that a difference is minimum between the total number of thin sheets curved in one direction and the total number of thin sheets curved in an opposite direction. It is particularly preferable that lamination is carried out such that adjacent thin sheets are curved in opposite directions.
Particularly when a plurality of rapidly solidified, thin alloy ribbons are laminated and then punched to form a magnetic core, and when each thin ribbon is curved, lamination is preferably carried out such that a difference is minimum between the total number of thin ribbons curved in one direction and the total number of thin ribbons curved in an opposite direction.
The magnetic sensor of the present invention mounted to a diskette-type memory card adapter comprises the above magnetic core and a coil wound around a part of the magnetic core. The coil is preferably separate from a center of a magnetic gap by 3 mm or more. The magnetic sensor may be provided with a mounting or positioning portion. An insulating member engaging the magnetic gap may be used for positioning.
The floppy disk-type memory card adapter according to the present invention is provided with the above magnetic sensor.
The rapidly solidified alloy is preferably an amorphous, soft magnetic alloy or an ultrafine crystalline alloy, and the amorphous, soft magnetic alloy is preferably a Co-based, amorphous, soft magnetic alloy. The thin sheet is obtained by punching or etching a rapidly solidified, thin alloy ribbon to an annular, rectangular shape with a gap. The thin sheet preferably has a thickness of 5-30 μm.
When a plurality of rapidly solidified, thin alloy sheets are laminated, a hot-melt adhesive is preferably used. The hot-melt adhesive is preferably a polyester-type, hot-melt adhesive.

BRIEF DESCRIPTION OF THE DRAWINGS

Fig. 1 is a schematic view showing a manner of using a floppy disk-type memory card adapter in a 3.5-inch floppy disk drive of a desktop personal computer;
Fig. 2 is a plan view showing one example of floppy disk-type memory card adapters;
Fig. 3 is a schematic view showing a manner of transmitting and receiving a signal between a magnetic sensor for a floppy disk-type memory card adapter and a magnetic head of FDD;
Fig. 4 is a plan view showing the punching of a magnetic core from a rapidly solidified, thin alloy ribbon, such that the longitudinal direction of a magnetic gap is in perpendicular to a magnetic anisotropy direction of the rapidly solidified, thin alloy ribbon, according to the present invention;
Fig. 5 is a plan view showing the punching of a magnetic core from a rapidly solidified, thin alloy ribbon, such that the longitudinal direction of a magnetic gap is crossing a magnetic anisotropy direction of the rapidly solidified, thin alloy ribbon at a predetermined angle, according to the present invention;
Fig. 6 is a plan view showing the punching of a magnetic core from a rapidly solidified, thin alloy ribbon, such that the longitudinal direction of a magnetic gap is in parallel with a magnetic anisotropy direction of the rapidly solidified, thin alloy ribbon, according to the present invention;

Fig. 7 is a plan view showing the magnetic sensor according to one embodiment of the present invention;

Fig. 8 is a plan view showing another example of a magnetic core shape according to the present invention;

Fig. 9 is a plan view showing a further example of a magnetic core shape according to the present invention;

Fig. 10 is a plan view showing a further example of a magnetic core shape according to the present invention;

Fig. 11 is a plan view showing a further example of a magnetic core shape according to the present invention;

Fig. 12 is a plan view showing a further example of a magnetic core shape according to the present invention;

Fig. 13 is a plan view showing a further example of a magnetic core shape according to the present invention;

Fig. 14 is a plan view showing a further example of a magnetic core shape according to the present invention;

Fig. 15 is a partial perspective view showing a member for positioning a magnetic core relative to a magnetic head of FDD;

Fig. 16 is a schematic perspective view showing the procedure of producing a laminated magnetic core of the present invention by laminating two thin ribbons with their curve directions opposite, and punching them;

Fig. 17(a) is a schematic perspective view showing one example of laminating two punched, thin sheets;

Fig. 17(b) is a schematic perspective view showing another example of laminating two punched, thin sheets;

Fig. 18 is a cross-sectional view showing an example of laminating thin ribbons;

Fig. 19(a) is a cross-sectional view showing another example of laminating thin ribbons;

Fig. 19(b) is a cross-sectional view showing a further example of laminating thin ribbons;

Fig. 20 is a graph showing the relations between a change ratio of inductance and frequency in the magnetic sensor in EXAMPLE 1;

Fig. 21 is a graph showing the relations between inductance and frequency in the magnetic sensors in EXAMPLES 3 and 4 and COMPARATIVE EXAMPLE 2; and

Fig. 22 is a view showing a shape and curve of a laminated magnetic core in EXAMPLE 7.

BEST MODE FOR CARRYING OUT THE INVENTION

[1] Magnetic core

(A) Rapidly solidified, thin alloy sheet

(1) Composition

The rapidly solidified alloy is an amorphous, soft magnetic alloy or an ultrafine crystalline alloy. The amorphous, soft magnetic alloy may be either an Fe-based, amorphous, soft magnetic alloy or a Co-based, amorphous, soft magnetic alloy, the Co-based, amorphous, soft magnetic alloy is preferable from the viewpoint of magnetic properties and punching workability.

The preferred composition of the Co-based, amorphous, soft magnetic alloy is represented by the following general formula: $Co_a M_b X_c Z_d$ (atomic %), wherein M is at least one element selected from the group consisting of Fe, Ni and Mn, X is at least one element selected from the group consisting of Si, B, P, C and Ge, Z is at least one element selected from the group consisting of Cr, Mo, W, Ti, Zr, Hf, V, Nb and Ta, a+b+c+d=100, $50 \leq a \leq 80$, $0 < b \leq 15$, $10 \leq c \leq 30$, and $0 \leq d \leq 10$.

The M element functions to adjust magnetic properties such as magnetostriction, Curie temperature, etc. of the Co-based, amorphous, soft magnetic alloy. To obtain good magnetic properties, the amount of the M element added should be 15 atomic % or less. The lower limit of the M element is not restrictive. The preferred amount of the M element added is 4-10 atomic %.

The X element functions to turn the alloy amorphous. Preferable in the X elements are Si, B, P and C, particularly Si and B. The addition of both Si and B provides the Co-based alloy with improved characteristics of making amorphous. To stably obtain the Co-based, amorphous, soft magnetic alloy, the amount of the X element added is preferably 10-30 atomic %. It is particularly preferable that Si is 6-12 atomic %, and that B is 8-14 atomic %.

The Z element functions to lower the Curie temperature of the Co-based, amorphous, soft magnetic alloy while maintaining its high permeability and low loss. When the amount of the Z element added exceeds 10 atomic %, the magnetic properties of the alloy are deteriorated, resulting in difficulty in adjusting the magnetostriction. Therefore, the upper limit of the amount of the Z element added is 10 atomic %. Though the lower limit may be 0 atomic %, sufficient effects can be obtained when the Z element is added in an amount of 1 atomic % or more. The more preferred amount of the Z element is 2-6 atomic %. Incidentally, with respect to the Fe-based, amorphous, soft magnetic alloy, those known in the art may be used.

With respect to the ultrafine crystalline alloys, an Fe-based, ultrafine crystalline alloy is known (Japanese Patent Laid-Open No. 64-79342). This Fe-based, amorphous, soft magnetic alloy contains Si and/or B and elements for making crystal grains fine, and is heat-treated at a temperature at which crystal grains are made fine. At least 50% of the structure of this alloy is occupied by crystal grains having a body-centered, cubic lattice structure having an average particle size of 300 Å or less when measured by their maximum dimensions. The elements for making crystal grains fine may be at least one element selected from the group consisting of Cu, Nb, W, Ta, Zr, Hf, Ti and Mo. A preferred example of such Fe-based, ultrafine crystalline alloys is an Fe-based, ultrafine crystalline alloy having a composition represented by

$$(Fe_{1-a}M_a)_{100-x-y-z-\alpha}Cu_xSi_yB_zM'_\alpha,$$

wherein M is Co and/or Ni, M' is at least one element selected from the group consisting of Nb, W, Ta, Zr, Hf, Ti and Mo, a, x, y, z and $\alpha$ satisfy $0 \leq a \leq 0.5$, $0.1 \leq x \leq 3$, $0 \leq y \leq 30$, $0 \leq z \leq 25$, $5 \leq y + z \leq 30$, and $0.1 \leq \alpha \leq 30$, at least 50% of its structure being occupied by fine crystal grains.

Because the above amorphous, soft magnetic alloys and ultrafine crystalline alloys have as high saturation magnetic flux density $Bs_{max}$ as 550 mT or more, large magnetic flux can be generated in the magnetic core made thereof.

(2) Production of rapidly solidified alloy

The amorphous, soft magnetic, thin alloy ribbon can be produced by a usual method for producing amorphous alloys. For instance, in the case of a Co-based, amorphous, soft magnetic, thin alloy ribbon, a mother alloy melt at 1250°C is ejected from a nozzle onto a copper roller rotating at a high speed for rapid quenching at a speed of about $10^6$ K/second, thereby forming an amorphous thin ribbon. In the case of an Fe-based, ultrafine crystalline alloy, an amorphous alloy of the same composition is produced and then subjected to a heat treatment at 450-700°C for 5 minutes to 24 hours.

(3) Shape

The formation of the magnetic core from a rapidly solidified, thin alloy ribbon may be carried out by punching, etching, etc., and punching by a die is preferable from the viewpoint of productivity. Punching hardly deteriorates the magnetic properties of the rapidly solidified, thin alloy ribbon. Though punching may be carried out after the lamination of thin ribbons, it is preferably carried out after lamination from the viewpoint of productivity.

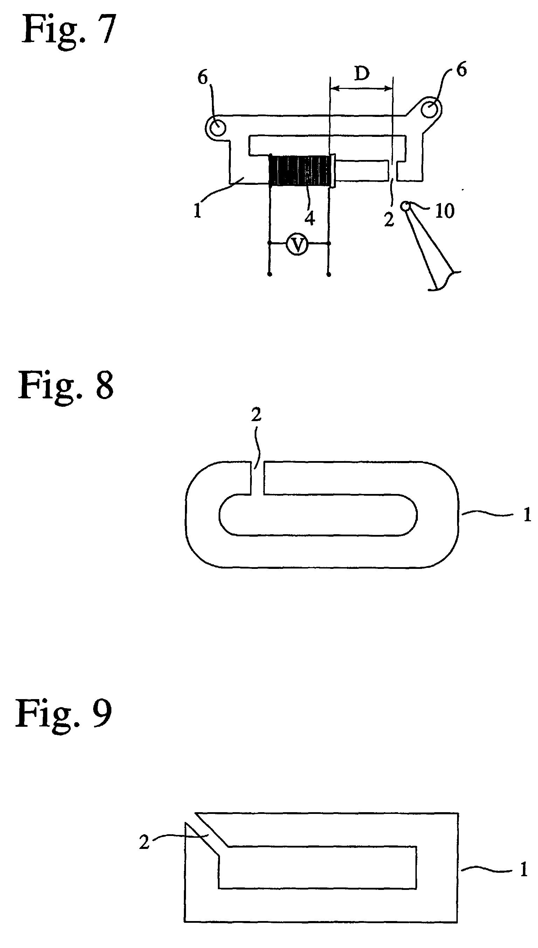

The magnetic core 1 in an embodiment shown in Fig. 7 is in an annular, rectangular shape with a magnetic gap 2 in a part of its magnetic path. The magnetic core 1 also has a pair of mounting portions 6, 6 on its outer periphery.

The magnetic cores of the present invention may also be in other shapes as shown in Figs. 8-14. A magnetic core 1 shown in Fig. 8 has a substantially oval shape with a magnetic gap 2 at a position deviated from a center of one long side. With such curved corners of the magnetic core 1, the breakage of the magnetic core and decrease in the life of a die can be prevented in the punching by a die.

Fig. 9 shows a magnetic core 1 in a rectangular shape with a magnetic gap 2 at one corner.

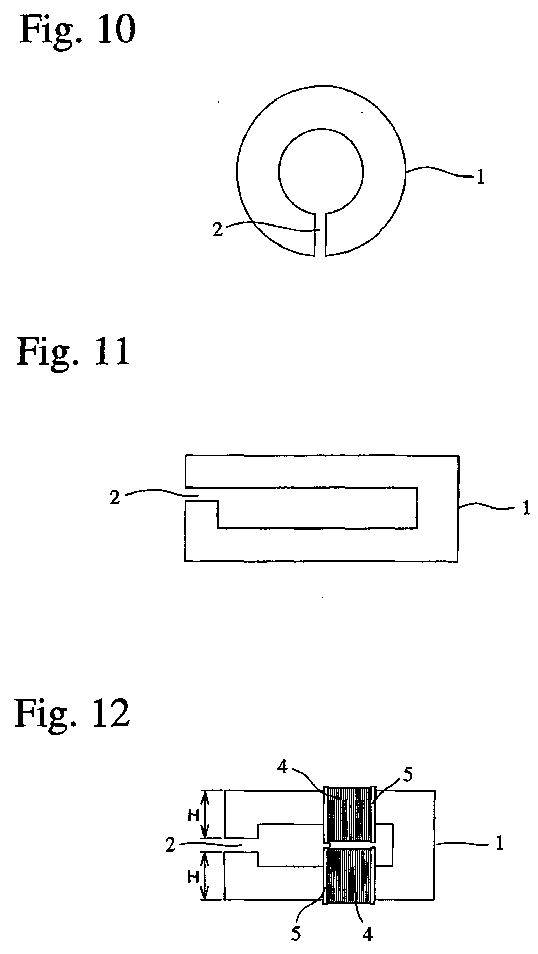

Fig. 10 shows a toroidal magnetic core 1 with only extremely small leakage of magnetic flux from other portions than a magnetic gap 2, thereby providing a magnetic sensor with high magnetic flux efficiency.

Fig. 11 shows a rectangular magnetic core 1 having a magnetic gap 2 in a short side adjacent to a corner. The magnetic core 1 of this shape can easily be inserted into a wound core without bending long sides of the core 1. Thus, this shape is suitable for magnetic cores made brittle by a heat treatment.

Fig. 12 shows a magnetic core 1 having a magnetic gap 2 at a center of one short side thereof. With the length H of short side portions on both sides of a magnetic gap 2 equal to or less than an inner diameter of a bobbin 5 for winding a coil 4, the coil can be mounted to the magnetic core 1 without deformation of the magnetic core 1. Accordingly, this shape is also suitable for magnetic cores constituted by thin sheets embrittled by a heat treatment. Also, if the coil were divided, a magnetic sensor would be miniaturized.

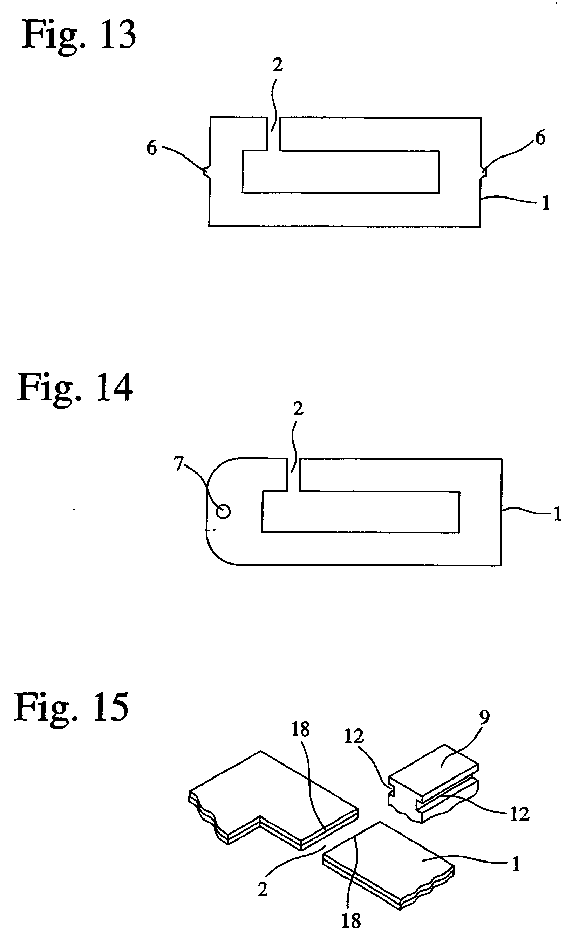

Figs. 13-15 show various mounting portions 6 provided on magnetic cores 1. The magnetic core 1 shown in Fig. 13 has outwardly projecting mounting portions 6, 6 in both short sides, the mounting portions 6, 6 being adapted to engage receiving portions of a memory card adapter. The magnetic core 1 shown in Fig. 14 has a positioning hole 7 in one short side, into which a screw stopper or a caulk of the memory card adapter is inserted. Mounting portions provided on an outer periphery of the magnetic core 1 do not interfere with a magnetic path of the magnetic core 1, resulting in no deterioration of magnetic properties.

Fig. 15 shows a positioning member 9 inserted into a magnetic gap 2 for regulating the position of the magnetic gap 2 of the magnetic core 1 relative to a magnetic head of FDD. Because the positioning member 9 has grooves 12, 12 on both side surfaces, it engages both ends 18, 18 of the magnetic gap 2.

(B) Lamination

The rapidly solidified, thin alloy sheet usually has a thickness of 5-30 $\mu$m, particularly 10-20 $\mu$m. Thus, a plurality of thin sheets are laminated if necessary. The total thickness of a laminate of rapidly solidified, thin alloy sheets is preferably 100 $\mu$m or less, so that the laminate is received in a floppy disk-type memory card adapter.

When thin sheets formed into a predetermined magnetic core shape are laminated, an adhesive applied between thin sheets to be laminated is preferably a coating-type adhesive, for instance, an epoxy resin-type adhesive. Also, when the rapidly solidified, thin alloy ribbons are laminated, the adhesive is preferably a film-type, hot-melt adhesive from the viewpoint of punchability and workability, particularly a polyester-type, hot-melt adhesive. The thickness of an adhesive is not restrictive, though it is preferably within a range of 2-20 $\mu$m.

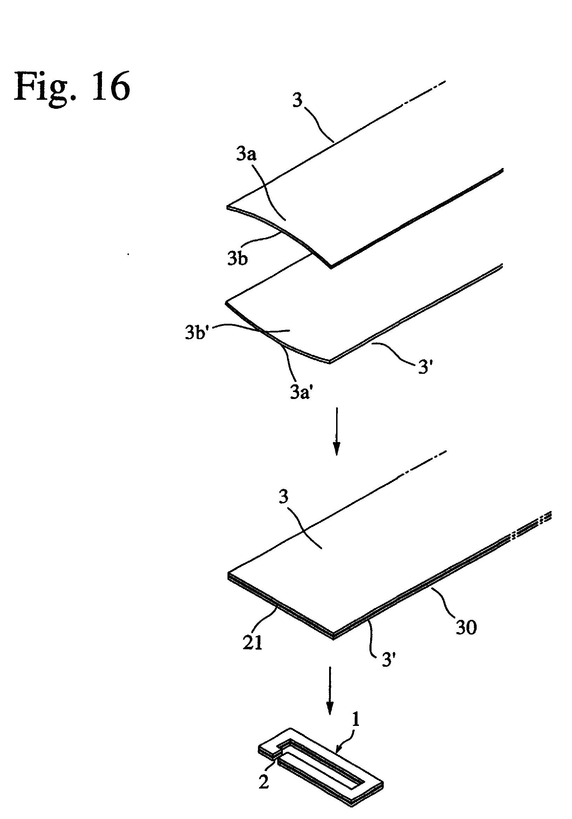

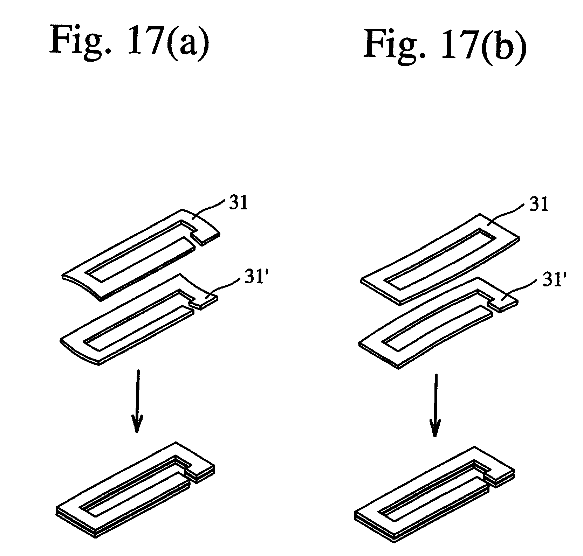

The rapidly solidified, thin alloy ribbon usually is curved to some extent because of its production procedure. To alleviate the curving of each thin ribbon or sheet by laminating a plurality of thin ribbons or sheets, they are laminated with their curve directions opposite as shown in Fig. 16. This can be achieved by bonding thin sheets 3, 3', such that concavely curved surfaces 3b and 3b' or convexly curved surfaces 3a and 3a' are facing each other. In the figure, 21 indicates an adhesive. As shown in Figs. 17(a) and (b), the lamination of a plurality of thin sheets 31, 31' punched in a magnetic core shape may be conducted such that their concavely curved surfaces or convexly curved surfaces are facing each other.

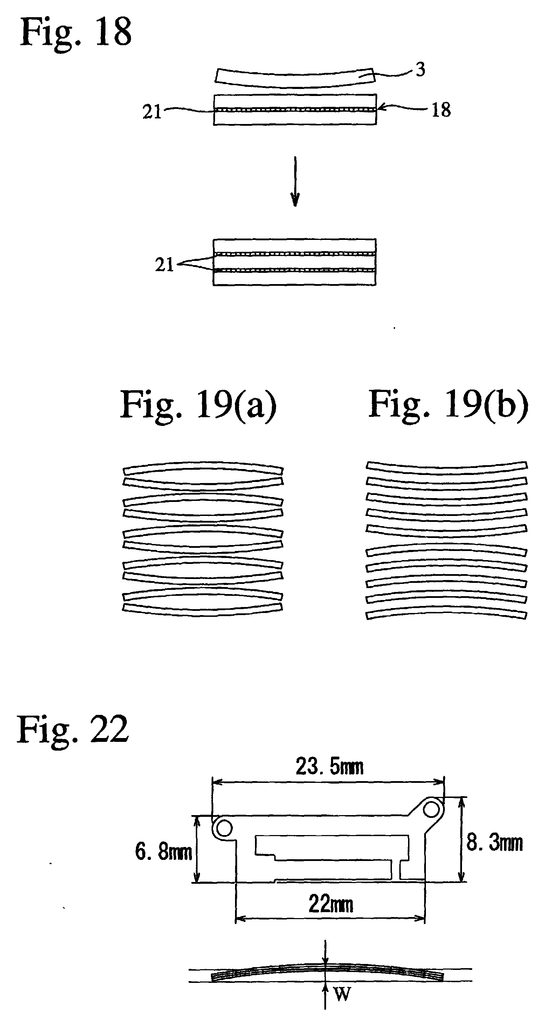

When three or more thin sheets are laminated, as shown in Fig. 18, for instance, an additional thin sheet 3 may newly be bonded to a previously formed laminate 18. In the figure, 21 indicates an adhesive. In the case of lamination of large numbers of thin sheets, pairs of thin, soft magnetic alloy sheets are separately laminated, and a plurality of resultant flat two-sheet laminates are then laminated. As another method, a plurality of thin sheets may be laminated by one step. Fig. 19(a) shows the lamination of thin sheets in such a manner that concavely curved surfaces or convexly curved surfaces of adjacent thin sheets are opposing each other. Also, Fig. 19(b) shows the lamination of thin sheets by a method that thin sheets divided into two groups of the same number are laminated separately with their curve directions aligned, and then a pair of resultant laminates are laminated such that their curve directions are opposite each other.

(C) Heat treatment

By heat-treating the amorphous, soft magnetic, thin alloy sheets, their magnetic anisotropy can be removed while improving their magnetic properties. The heat treatment should be carried out at a temperature lower than their crystallization temperature. Because the heat treatment makes the amorphous, soft magnetic, thin alloy sheets brittle, the heat treatment temperature differs between before and after punching in a magnetic core shape. Specifically, when the heat treatment is carried out after punching in a magnetic core shape, the temperature range is preferably 180-540° C, more preferably 350-540°C. Also, when the beat treatment is carried out before punching in a magnetic core shape, the temperature range is preferably 180-220° C.

(D) Magnetic gap

The magnetic core of the present invention has a magnetic gap in a direction crossing the magnetic anisotropy direction of the rapidly solidified, thin alloy sheet. Because the amorphous, soft magnetic, thin alloy sheet has a magnetic anisotropy direction substantially in parallel with the longitudinal direction of a thin ribbon obtained by rapid quenching, the magnetic gap 2 may be formed in a width direction of the thin ribbon 3 as shown in Fig. 4. A magnetic core with a magnetic gap 2 in this direction has good inductance, even if it is thinner than a magnetic core made of Permalloy.

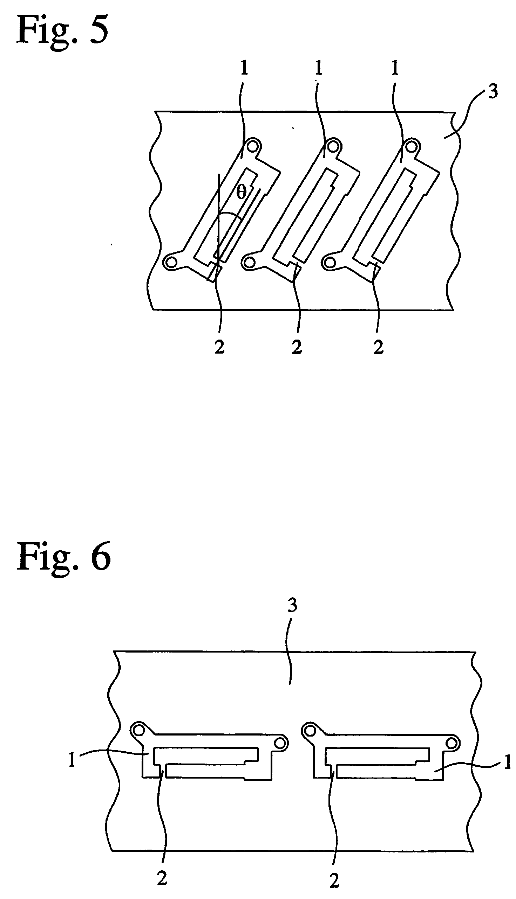

Fig. 5 shows a case where the longitudinal direction of the magnetic gap 2 is deviated from the width direction of the thin ribbon 3 by an angle $\theta$. A magnetic sensor constituted by this magnetic core exhibits inductance increasing with the angle $\theta$, minimum at $\theta = 90°$. Thus, the angle $\theta$ is preferably 60° or less.

Incidentally, the magnetic cores of the present invention are not limited to those obtained from amorphous, soft magnetic, thin alloy sheets, and they may similarly be formed from thin, ultrafine crystalline alloy sheets.

[2] Magnetic sensor

Fig. 7 shows a magnetic sensor according to a preferred embodiment of the present invention. This magnetic sensor is constituted by a magnetic core 1 of 20 $\mu$m to 0.5 mm in thickness, and a coil 4 wound around the magnetic core 1 by about 100-200 turns. The magnetic gap 2 of the magnetic core 1 is opposite a magnetic gap of a magnetic head 10 of FDD via a small space, for instance, space corresponding to a thickness of a plastic sheet, so that the inputting and outputting of information can be carried out by electromagnetic interaction between the magnetic head 10 of FDD and the magnetic sensor. Because the coil 4 per se generates magnetic flux, a distance D between the coil 4 and a center of the magnetic gap 2 is preferably 3 mm or less so as not to adversely affect the magnetic gap 2 of the magnetic core 1 and the R/W head 10 of FDD. Incidentally, when a coil 4 wound around a bobbin 5 is mounted to the magnetic core, a portion of the magnetic core in which the magnetic gap is provided may be deformed for insertion. Because a magnetic core portion is elastically deformed, it springs back to an original shape after the mounting of a coil 4 wound around a bobbin 5.

When the magnetic core 1 constituted by thin sheets of an amorphous, soft magnetic alloy or an ultrafine crystalline alloy is used for a magnetic sensor, a coil 4 of the magnetic sensor generates high voltage by magnetic flux from the R/W head 10 of FDD, with high magnetic flux leaking from the magnetic gap 2, resulting in high output voltage from the R/W head 10 of FDD.

[3] Memory card adapter

The floppy disk-type memory card adapter of the present invention is characterized by having the above magnetic sensor, and its structure other than the magnetic sensor may be the same as those known in the art as shown in Fig. 2. Because the magnetic sensor of the present invention can generate high output voltage, an amplifier circuit may be omitted in some cases.

The present invention will be described in more detail referring to the following EXAMPLES without intension of limiting the scope of the present invention thereto.

EXAMPLE 1, COMPARATIVE EXAMPLE 1

Produced as rapidly solidified, thin alloy ribbons were three Co-based, amorphous, soft magnetic, thin alloy ribbons having a composition of $Co_{69}Mo_{2.5}(Fe, Mn)_5(Si, B)_{23.5}$ by atomic % (width: 30 mm, thickness: 18 µm, length: 4000 m). With start portions of the ribbons formed from an alloy melt aligned on the same side, three thin ribbons were integrally laminated by a polyester-type, hot-melt adhesive. The resultant laminate was punched by a press at three positions; a position S of about 500 m from the start portion, an intermediate position M, and a position E of about 3500 m from the start portion, to provide rectangular magnetic cores each having a magnetic gap in a part of a magnetic path thereof as shown in Figs. 4 and 6. The longitudinal direction of a magnetic gap is in parallel with the width direction of the thin ribbon 3 in the magnetic core shown in Fig. 4, while the longitudinal direction of a magnetic gap is in perpendicular to the width direction of the thin ribbon 3 in the magnetic core shown in Fig. 6.

A coil (wire diameter: 0.07 mm, 175 turns) was mounted to each magnetic core to prepare a magnetic sensor 115 in a shape shown in Fig. 7, and its inductance was measured by an impedance analyzer 4194A (available from HP Japan). Also as COMPARATIVE EXAMPLE 1, a magnetic core having the same shape as in EXAMPLE 1 except for being constituted by one Permalloy sheet having a thickness of 200 µm was produced, and the same coil as in EXAMPLE 1 was wound around the magnetic core to provide a magnetic sensor for measurement of inductance. Incidentally, to prevent a coil 4 from affecting a R/W head 10 in Fig. 7, the coil 4 was separated from a magnetic gap 2 by 3 mm or more. With respect to each magnetic core, the measurement results of inductance are shown in Table 1.

Table 1

| Point[1] | Magnetic Gap | Inductance | | | | | |
|---|---|---|---|---|---|---|---|
| | | 1 kHz | 10 kHz | 100 kHz | 250 kHz | 500 kHz | 1 MHz |
| S | Fig. 4 | 627 | 601 | 547 | 520 | 483 | 411 |
| | Fig. 6 | 668 | 563 | 372 | 322 | 283 | 235 |
| M | Fig. 4 | 682 | 658 | 602 | 562 | 503 | 428 |
| | Fig. 6 | 616 | 606 | 585 | 573 | 552 | 517 |
| E | Fig. 4 | 681 | 668 | 643 | 615 | 566 | 492 |
| | Fig. 6 | 647 | 641 | 630 | 614 | 585 | 549 |
| COMPARATIVE EXAMPLE 1 | | 711 | 690 | 540 | 441 | 370 | 292 |

Note:
(1) Point in a thin alloy ribbon.

As is clear from Table 1, the punching position of the thin ribbon and the direction of the magnetic gap have substantially no influence on the inductance of the resultant magnetic core at a low frequency of 1 kHz. In every case, however, as the frequency increases, the inductance decreases. This tendency was remarkable particularly when the longitudinal direction of the magnetic gap was in perpendicular to the width direction of the thin ribbon 3 (shown in Fig. 6), and when the magnetic gap was punched from the start portion (S) of the thin ribbon. On the other hand, when the longitudinal direction of the magnetic gap was in parallel with the width direction of the thin ribbon 3 (shown in Fig. 4), better inductance was obtained in a high-frequency region of 100 kHz or more than that in COMPARATIVE EXAMPLE 1 using a Permalloy magnetic core.

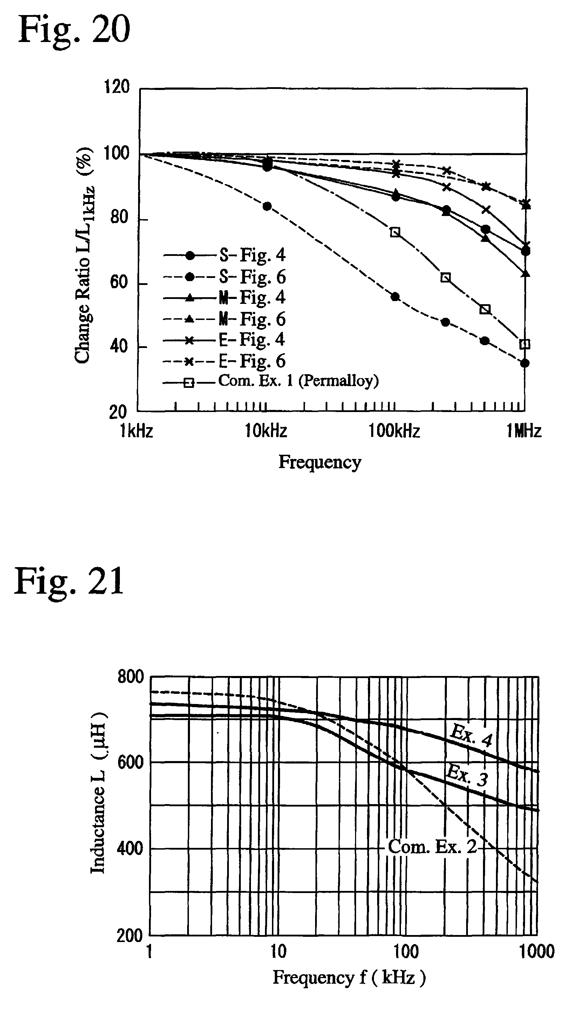

Fig. 20 shows relations between the inductance shown in Table 1 (assuming a value at 1 kHz as 100%) and frequency. These results revealed that the magnetic core of the present invention obtained by punching an amorphous, soft magnetic, thin alloy ribbon had much more excellent properties than those of the Permalloy magnetic core in COMPARATIVE EXAMPLE 1. To obtain a magnetic core having excellent magnetic properties, punching is preferably conducted such that the longitudinal direction of a magnetic gap is in parallel with the width direction of a thin ribbon in a start portion (S) of the thin ribbon in which magnetic anisotropy is substantially in parallel with the longitudinal direction of the thin ribbon. Also, in portions of the thin ribbon other than the start portion (S), punching is preferably carried out such that the longitudinal direction of a magnetic gap is in perpendicular to the width direction of the thin ribbon, to obtain a magnetic core excellent in magnetic properties. This appears to be due to the fact that magnetic anisotropy is deviated from the longitudinal direction of a thin ribbon in portions of the thin ribbon other than the start portion (S).

EXAMPLE 2

Using a laminate of Co-based, amorphous, soft magnetic, thin alloy ribbons produced in EXAMPLE 1, investigation was conduced on relations between the direction of a magnetic gap and inductance at 250 kHz in a start portion (S) of the thin ribbon. The angle $\theta$ of the longitudinal direction of the magnetic gap relative to the width direction of the thin ribbon 3 was 0° in the case of Fig. 4, 30° and 60° in the case of Fig. 5, and 90° in the case of Fig. 6. A magnetic core with each magnetic gap direction was produced to measure inductance in the same manner as in EXAMPLE 1. The results are shown in Table 2. Table 2 also shows inductance in the case of using the Permalloy magnetic core in COMPARATIVE EXAMPLE 1. It is clear from Table 2 that as $\theta$ increases, the inductance decreases, and that the magnetic core made of a Co-based, amorphous, soft magnetic alloy has larger inductance than that of a magnetic core made of Permalloy at $\theta \leq 60°$.

Table 2

| Angle to Thin Ribbon (°) | Direction of Magnetic Gap | Inductance ($\mu$H) at 250 kHz |
|---|---|---|
| 0 | Fig. 4 | 527 |
| 30 | Fig. 5 | 501 |
| 60 | Fig. 5 | 455 |
| 90 | Fig. 6 | 363 |
| Com. Ex. 1 | - | 441 |

EXAMPLES 3 and 4, COMPARATIVE EXAMPLE 2

Co-based, amorphous, soft magnetic, thin alloy ribbons (thickness: 18 $\mu$m, width: 25 mm) available from Hitachi Metals, Ltd. having the following compositions:

ACO-3: $Co_{69.49}Fe_{0.38}Mn_{5.83}Si_{14.5}B_{9.5}Mo_{0.3}$, and
ACO-5: $Co_{68.31}Fe_{1.28}Mn_{3.66}Si_{14.75}B_{9.5}Mo_{2.5}$

were punched in an annular, rectangular shape to provide magnetic cores, which were heat-treated under the conditions of 400°C x 2 hours. Each annular, rectangular magnetic core had a dimension of 16.5 mm x 6.5 mm in outer periphery and 12 mm x 2.5 mm in inner periphery. The magnetic gap length (length in parallel with a magnetic path) was 0.8 mm. Mounted to this magnetic core was a 175-turn coil having a wire diameter of 0.07 mm wound around a resin bobbin, thereby producing a magnetic sensor (EXAMPLES 3 and 4). To prevent the coil from affecting a R/W head, the coil was separated from the magnetic gap by 3 mm or more. Also, a magnetic gap of the same size was formed from a Permalloy sheet of 100 μm to produce a magnetic sensor (COMPARATIVE EXAMPLE 2) under the same conditions as above.

With a R/W head of FDD disposed in the vicinity of the magnetic gap of each magnetic sensor, a pulse signal corresponding to a data signal from a computer was sent to FDD, thereby causing the R/W head of FDD to generate magnetic flux corresponding to the pulse signal. The resultant magnetic flux was detected by a magnetic gap 2 of the magnetic core, whereby the coil wound around the magnetic core generates output voltage corresponding to the pulse signal. At a transmission frequency of 250 kHz, the output voltage of each magnetic sensor was compared. The results are shown in Table 3.

Table 3

| No. | Heat Treatment | Magnetic Core | | | Output Voltage $V_{p-p}$ (mV) |
|---|---|---|---|---|---|
| | | Material | Number of Lamination | Thickness* (μm) | |
| EX. 3 | No | ACO-3 | 1 | 18 | 125 |
| | | ACO-3 | 2 | 36 | 159 |
| | | ACO-3 | 3 | 54 | 217 |
| | | ACO-5 | 1 | 18 | 489 |
| | | ACO-5 | 2 | 36 | 530 |
| | | ACO-5 | 3 | 54 | 716 |
| EX.4 | Yes | ACO-3 | 1 | 18 | 595 |
| | | ACO-3 | 2 | 36 | 795 |
| | | ACO-3 | 3 | 54 | 805 |
| | | ACO-5 | 1 | 18 | 706 |
| | | ACO-5 | 2 | 36 | 884 |
| | | ACO-5 | 3 | 54 | 945 |
| COM. EX. 2 | | Permalloy | 1 | 100 | 302 |
| | | Permalloy | 2 | 200 | 458 |

Note:
* The thickness of an adhesive was ignored.

As is clear from Table 3, the magnetic sensors of EXAMPLES 3 and 4 except for part thereof generated higher output voltage than the magnetic sensor of COMPARATIVE EXAMPLE 2. The magnetic cores constituted by one Co-based, amorphous, soft magnetic, thin alloy sheet also generated output voltage equal to or higher than that of the magnetic core obtained by laminating two Permalloy sheets (thickness: 200 μm). Further, by heat-treating the Co-based, amorphous, soft magnetic, thin alloy sheet, higher output voltage was obtained.

The above results revealed; (a) thinner magnetic cores than the Permalloy magnetic cores can be produced by using Co-based, amorphous, soft magnetic, thin alloy sheets, and (b) a heat treatment on the Co-based, amorphous, soft magnetic, thin alloy sheets provided thin magnetic cores with higher magnetic properties, resulting in decrease in the number of turns of coils. Also, because the Co-based, amorphous, soft magnetic, thin alloy sheets subjected to no heat treatment are easy to handle, they recover completely the original shapes even if their gap portions are deformed to mount coils wound around bobbins thereto, proving that they are easy in mounting coils. On the other hand, because deformation remains in the Permalloy magnetic cores, forming is necessary after mounting bobbins.

The output level necessary for omitting amplifier circuits from the floppy disk-type memory card adapters is 800 $mV_{p-p}$, and output voltage over this level could be obtained by magnetic sensors comprising magnetic cores constituted by laminates of three heat-treated, Co-based, amorphous, soft magnetic, thin alloy sheets. Importantly, the thickness of these magnetic cores was 1/3 or less of that of the Permalloy magnetic cores (200 μm).

Selecting a magnetic core constituted by a three-layer laminate made of Co-based, amorphous, soft magnetic alloy ACO-5 (not heat-treated) from EXAMPLE 3, the same magnetic core constituted by Co-based, amorphous, soft magnetic, thin alloy sheets as in EXAMPLE 3 except for heat treatment at 400°C from EXAMPLE 4, and a magnetic core constituted by two laminated, thin Permalloy sheets from COMPARATIVE EXAMPLE 2, magnetic sensors were produced under the same conditions as in Table 1. With respect to each magnetic sensor, the frequency characteristics of inductance were measured. The results are shown in Fig. 21.

As is clear from Fig. 21, though the magnetic sensor of COMPARATIVE EXAMPLE 2 showed higher inductance than those of EXAMPLES 3 and 4 at a frequency of less than 100 kHz, smaller decrease in inductance was achieved at 100 kHz or more in the magnetic sensors of EXAMPLES 3 and 4 than in COMPARATIVE EXAMPLE 2. Also, at 500 kHz, the inductance of the magnetic core of EXAMPLE 4 was 1.5 times that of COMPARATIVE EXAMPLE 2. This verifies that using a magnetic core constituted by Co-based, amorphous, soft magnetic, thin alloy sheets, high inductance can be achieved even in a high-frequency region. Though an FD-type adapter for a memory card equipped with a magnetic sensor comprising a Permalloy magnetic core in COMPARATIVE EXAMPLE 2 is operable only up to a transmission frequency of 250 kHz, a magnetic sensor comprising a magnetic core constituted by Co-based, amorphous, soft magnetic, thin alloy sheets is operable even at a transmission frequency of 500 kHz or more. This verifies that using a magnetic sensor comprising a magnetic core constituted by Co-based, amorphous, soft magnetic, thin alloy sheets, a data transmission speed can be increased between a computer and a memory card.

EXAMPLE 5

To investigate heat treatment temperature conditions for improving the magnetic properties of a Co-based, amorphous, soft magnetic, thin alloy sheet without embrittlement, the following experiment was conducted. First, a thin ribbon of the same Co-based, amorphous, soft magnetic alloy ACO-5 as in EXAMPLE 3 was wound around a non-magnetic metal reel, subjected to a heat treatment under the conditions of temperature and time shown in Table 4, and then punched in a shape shown in Fig. 22. A coil (wire diameter: 0.08 mm, number of turns: 175) was mounted to a magnetic core constituted by one thin sheet thus obtained to produce a magnetic sensor. With respect to each of the resultant magnetic sensors, inductance was measured. The inductance under each heat treatment temperature condition is shown in Table 4.

Table 4

| Heat Treatment | | Inductance (μH) | | | Punchability[1] |
|---|---|---|---|---|---|
| Temperature | Time | 10 kHz | 100 kHz | 500 kHz | |
| 160°C | 2 hours | 463 | 420 | 350 | ◯ |
| 180°C | 2 hours | 666 | 554 | 370 | ◯ |
| 200°C | 2 hours | 675 | 553 | 362 | △ |
| 220°C | 2 hours | 669 | 546 | 350 | △ |
| -* | -* | 341 | 309 | 270 | ◯ |

Note:
* Not heat-treated.
(1)
◯ Good.
△ There was fine split on a fractured surface.

As is clear from Table 4, magnetic properties were remarkably improved by carrying out heat treatment at 180-220° C on the Co-based, amorphous, soft magnetic, thin alloy sheet that would have low magnetic properties but for the heat treatment. With respect to embrittlement by heat treatment, punching could be carried out under any of the above heat treatment conditions. Though fine split was generated on a fractured surface at 200° C and 220° C, there arose no practical problems. As a result, it has been found that the beat treatment temperature conditions for improving magnetic properties while keeping easy-to-handle characteristics can be a temperature range of 180-220° C, though they are preferably a range of 180-190°C.

EXAMPLE 6

A thin sheet of a Co-based, amorphous, soft magnetic alloy (ACO-5) without heat treatment was punched to a magnetic core, which was then heat-treated. A coil (wire diameter: 0.08 mm, number of turns: 175) was mounted to a magnetic core constituted by the resultant one thin sheet, to measure inductance under the same conditions as in EXAMPLE 5. The results are shown in Table 5. As is clear from Table 5, the heat treatment improved magnetic properties without causing damage despite slight embrittlement, resulting in good easy-to-handle characteristics.

Table 5

| Heat Treatment | | Inductance (µH) | | |
|---|---|---|---|---|
| Temperature | Time | 10 kHz | 100 kHz | 500 kHz |
| 200°C | 2 hours | 541 | 485 | 399 |
| 215°C | 2 hours | 561 | 505 | 417 |
| 230°C | 2 hours | 578 | 519 | 427 |
| -* | -* | 343 | 307 | 270 |

Note:
* Not heat-treated.

EXAMPLE 7

Part of a Co-based, amorphous, soft magnetic, thin alloy ribbon having a composition of $Co_{69}Mo_{2.5}(Fe, Mn)_5(Si, B)_{23.5}$ by atomic % (thickness: 18 µm, width: 25 mm) was cut to a length of 50 mm to provide Sample No. 1. As shown in Fig. 22, Sample No. 1 was placed on a flat table with its convexly curved surface upward, to measure a distance W between a flat surface of the table and an apex of a concaved surface of a thin sheet sample, which was defined as curve. As a result, the curve was found to be 2.4 mm.

Two thin sheets cut in the same manner as Sample No. 1 were bonded at 80°C with a polyester-type, hot-melt adhesive disposed between convexly curved surfaces thereof, and then bonded to another thin sheet of the same alloy with the same hot-melt adhesive at 80°C to produce a laminate (Sample No. 2). The curve of this laminate was measured under the same conditions as above. As a result, the curve of Sample No. 2 was 0.4 mm. On the other hand, the laminate (Sample No. 3) produced under the same conditions as above except for laminating three thin sheets aligned in the same curve direction had a curve of 1 mm.

A laminate (Sample No. 4) obtained by laminating long Co-based, amorphous, soft magnetic, thin alloy ribbons in the same manner as Sample No. 2 was punched by a press to produce a magnetic core in a shape shown in Fig. 22. The curve of the magnetic core was measured. The punching direction (shown in Fig. 4) of the thin ribbon was such that the short side of the magnetic core was in parallel with the longitudinal direction of the thin ribbon. As a result, the curve of the laminated magnetic core of Sample No. 4 was 0.2 mm. On the other hand, Sample No. 5 laminated in the same manner as in Sample No. 3 had a curve of 0.6 mm. Also, a magnetic core of Sample No. 6 constituted by only one punched thin sheet had a curve of 1.7 mm.

To improve the properties of the punched magnetic core, a heat treatment was carried out at 420° C while applying stress in a direction of the sheet thickness. As a result, any of Sample Nos. 4-6 had as reduced curve as 0.1 mm. The above results are shown in Table 6.

Table 6

| Lamination Direction | Curve (mm) | | |
|---|---|---|---|
| | Adhesion after Punching | Punching after Adhesion | After Heat Treatment |
| Alternate Curve Directions | 0.4 | 0.2 | 0.1 |
| Aligned Curve Directions | 1.0 | 0.6 | 0.1 |
| One Sheet | 2.4 | 1.7 | 0.1 |

A coil (wire diameter: 0.08 mm, number of turns: 175) was mounted to each magnetic core obtained from laminates of Co-based, amorphous, soft magnetic, thin alloy sheets of Sample Nos. 4 and 5, to measure inductance. The measurement of inductance was carried out before and after the heat treatment. For comparison, inductance was measured with respect to a magnetic core constituted by one Permalloy sheet of 200 µm in thickness. The results are shown in Table 7. As is clear from Table 7, any lamination methods provided magnetic cores with higher inductance than that of the Permalloy magnetic core. Also, in the case of the lamination of Sample No. 4, inductance was remarkably improved by the heat treatment.

Table 7

| Sample No. | Lamination Direction | Thickness of Laminate (µm) | Inductance (µH) | |
|---|---|---|---|---|
| | | | Before HT* | After HT* |
| No. 4 | Alternate Curve Directions | 54 | 692 | 971 |
| No. 5 | Aligned Curve Directions | 54 | 716 | 945 |
| Permalloy | - | 200 | - | 448 |

Note
*: Heat treatment.

The magnetic core (Sample No. 4) constituted by thin sheets laminated with alternate curve directions has sufficient magnetic properties with ease to handle, even if the heat treatment is not applied. When amorphous, soft magnetic, thin alloy ribbons are laminated with their curve directions alternate, curving can be prevented, resulting in flat laminated magnetic cores. Also, because amorphous, soft magnetic, thin alloy sheets can provide thin laminates, the resultant magnetic cores, when used for magnetic sensors for FD-type memory card adapters, can make the FD-type memory card adapters thin.

As described above in detail, because rapidly solidified, thin alloy sheets are used for a magnetic core for a magnetic sensor according to the present invention, high output voltage can be obtained, thereby making an amplifier circuit unnecessary in a FD-type memory card adapter. Thus, it is possible to reduce the area of a circuit pattern, the number of parts assembled and the number of assembling steps, resulting in a longer life of a battery. Further, with good frequency characteristics, data transmission frequency increases, resulting in remarkable increase in data transmission speed between a computer and a memory card adapter. Also, the magnetic core for a magnetic sensor can be miniaturized with the number of coil turns reduced and output voltage increased. Because the characteristics of the magnetic cores produced by punching rapidly solidified, thin alloy ribbons are made uniform, the magnetic cores can exhibit stable characteristics for magnetic sensors.

**Claims**

1.  A magnetic core obtained by laminating a plurality of rapidly solidified, thin alloy sheets and punching the resultant laminate.

2.  The magnetic core according to claim 1, wherein said plurality of rapidly solidified, thin alloy sheets are laminated after heat treatment, and then punched.

3.  The magnetic core according to claim 1, wherein said plurality of rapidly solidified, thin alloy sheets are heat-treated after lamination, and then punched.

4.  The magnetic core according to claim 2 or 3, wherein said heat treatment is carried out at a temperature of 180-220° C.

5.  The magnetic core according to claim 1, wherein said plurality of rapidly solidified, thin alloy sheets are punched after lamination, and then heat-treated.

6.  The magnetic core according to claim 1, wherein said rapidly solidified, thin alloy sheets are laminated after punching, and then heat-treated.

7.  The magnetic core according to claim 5 or 6, wherein said heat treatment is carried out at a temperature of 180-540°C.

8.  The magnetic core according to any one of claims 1-7, wherein said thin sheets are laminated by a hot-melt adhesive.

9. The magnetic core according to claim 8, wherein said hot-melt adhesive is a polyester-type, hot-melt adhesive.

10. A magnetic core for use in a magnetic sensor for a diskette-type memory card adapter, wherein said magnetic core is constituted by at least one rapidly solidified, thin alloy sheet with a magnetic gap in a direction crossing a magnetic anisotropy direction of said thin sheet.

11. The magnetic core according to claim 10, wherein said rapidly solidified alloy is an amorphous, soft magnetic alloy or an ultrafine crystalline alloy.

12. The magnetic core according to claim 10 or 11, wherein said thin sheet is obtained by punching or etching a rapidly solidified, thin alloy ribbon in an annular, rectangular shape, with a magnetic gap in part of a magnetic path thereof.

13. The magnetic core according to any one of claims 10-12, wherein a longitudinal direction of said magnetic gap is at an angle of 0-60° relative to a width direction of said rapidly solidified, thin alloy ribbon.

14. The magnetic core according to claim 12 or 13 obtained by laminating a plurality of thin sheets formed by punching or etching said rapidly solidified, thin alloy ribbons.

15. The magnetic core according to claim 14, wherein said rapidly solidified, thin alloy ribbons are amorphous, soft magnetic, thin alloy ribbons, which are laminated with an adhesive and then punched.

16. The magnetic core according to claim 15, wherein said adhesive is a hot-melt adhesive.

17. The magnetic core according to any one of claims 10-16, wherein said rapidly solidified, thin alloy sheets are made of an amorphous, soft magnetic alloy, and punched after heat treatment at 180-220° C.

18. The magnetic core according to any one of claims 10-17, wherein said rapidly solidified, thin alloy sheets have a thickness of 5-30 μm.

19. The magnetic core according to claim 17 or 18, wherein said amorphous, soft magnetic, thin alloy sheets have a maximum saturation magnetic flux density $Bs_{max}$ of 550 mT or more.

20. The magnetic core according to any one of claims 17-19, wherein said amorphous, soft magnetic, thin alloy sheet is made of a Co-based, amorphous, soft magnetic alloy.

21. The magnetic core according to any one of claims 10-20, wherein said magnetic core has one or more mounting portions at outer peripheral positions that do not binder an effective magnetic path.

22. A magnetic core for use in a magnetic sensor for a diskette-type memory card adapter, said magnetic core being obtained by laminating a plurality of rapidly solidified, thin alloy ribbons with an adhesive and then punching the resultant laminate.

23. The magnetic core according to claim 22, wherein said rapidly solidified, thin alloy sheets are made of a Co-based, amorphous, soft magnetic alloy, and punched after heat treatment at 180-220° C.

24. The magnetic core according to claim 22, wherein a plurality of rapidly solidified, thin alloy sheets are laminated, punched and then heat-treated at 180-540°C.

25. The magnetic core according to any one of claims 22-24, wherein said adhesive is a hot-melt adhesive.

26. The magnetic core according to any one of claims 22-25, wherein each rapidly solidified, thin alloy sheet has a thickness of 5-30 μm, an adhesive layer between the thin sheets has a thickness of 2-20 μm, and a laminate of said thin sheets and said adhesive has a thickness of 100 μm or less.

27. The magnetic core according to any one of claims 22-26, wherein all Co-based, amorphous, soft magnetic, thin alloy sheets have a substantially aligned magnetic anisotropy direction, and a longitudinal direction of a magnetic gap disposed in part of a magnetic path thereof is crossing a magnetic anisotropy direction of said thin sheet.

**28.** The magnetic core according to any one of claims 22-27, wherein said magnetic core has one or more mounting portions at outer peripheral positions that do not hinder an effective magnetic path.

**29.** A magnetic core for use in a magnetic sensor for a diskette-type memory card adapter, said magnetic core being constituted by a plurality of rapidly solidified, thin alloy sheets laminated via an adhesive, such that a difference is minimum between the total number of thin sheets curved in a first direction and the total number of thin sheets curved in a second direction, and a magnetic gap being provided in a part of a magnetic path in a laminate of said thin sheets.

**30.** The magnetic core according to claim 29, wherein lamination is carried out such that adjacent thin sheets are curved in opposite directions.

**31.** The magnetic core according to claim 29 or 30, wherein each thin sheet has a thickness of 5-30 μm.

**32.** The magnetic core according to claim 30 or 31, wherein said rapidly solidified, thin alloy sheets are formed by punching or etching amorphous, soft magnetic, thin alloy ribbons.

**33.** A magnetic core for use in a magnetic sensor for a diskette-type memory card adapter, said magnetic core being constituted by a laminate obtained by laminating a plurality of rapidly solidified, thin alloy ribbons via an adhesive, and punching them in a predetermined shape, said thin ribbons being laminated such that a difference is minimum between the total number of thin ribbons curved in a first direction and the total number of thin ribbons curved in a second direction, and said laminate having a magnetic gap in a part of a magnetic path.

**34.** A magnetic sensor for a diskette-type memory card adapter, comprising a magnetic core according to any one of claims 1-33 and a coil wound around a part of said magnetic core.

**35.** The magnetic sensor according to claim 34, wherein its positioning is achieved by an insulating member engaging said magnetic gap.

**36.** The magnetic sensor according to claim 34 or 35, wherein said coil is separate from a center of said magnetic gap by 3 mm or more.

**37.** A floppy disk-type memory card adapter provided with said magnetic sensor according to any one of claims 34-36.

**38.** A method for producing a magnetic core for use in a magnetic sensor for a diskette-type memory card adapter, comprising the steps of laminating a plurality of rapidly solidified, thin alloy sheets via an adhesive, and then punching the resultant laminate.

**39.** The method according to claim 38, wherein said rapidly solidified, thin alloy sheets are subjected to a heat treatment at a temperature of 180-220° C before punching.

**40.** The method according to claim 38, wherein said rapidly solidified, thin alloy sheets are subjected to a heat treatment at a temperature of 180-540° C after punching.

**41.** The method according to any one of claims 38-40, wherein a hot-melt adhesive is used as said adhesive.

**42.** The method according to claim 41, wherein said hot-melt adhesive is a polyester-type, hot-melt adhesive.

# Fig. 1

101

102

103

104

# Fig. 2

113 115 103

130

117

127

104

123 125

# Fig. 3

# Fig. 4

EP 1 067 567 A1

Fig. 5

Fig. 6

17

# Fig. 7

# Fig. 8

# Fig. 9

## Fig. 10

## Fig. 11

## Fig. 12

# Fig. 13

2

6

6

1

# Fig. 14

2

7

1

# Fig. 15

18

12

9

12

1

2

18

# Fig. 16

3

3a

3b

3b'

3a'

3'

3

21

3'

30

1

2

# Fig. 17(a)

# Fig. 17(b)

# Fig. 18

# Fig. 19(a)  Fig. 19(b)

# Fig. 22

23.5mm

6.8mm

8.3mm

22mm

W

## Fig. 20

## Fig. 21

# INTERNATIONAL SEARCH REPORT

| International application No. |
|---|
| PCT/JP00/00352 |

| A. CLASSIFICATION OF SUBJECT MATTER |
|---|
| Int.Cl⁷ H01F 41/02, 3/04<br>G01R 33/02 |

According to International Patent Classification (IPC) or to both national classification and IPC

| B. FIELDS SEARCHED |
|---|
| Minimum documentation searched (classification system followed by classification symbols)<br>Int.Cl⁷ H01F 41/02, 3/04<br>G01R 33/02 |

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2000 |
| Kokai Jitsuyo Shinan Koho | 1971-2000 | Toroku Jitsuyo Shinan Koho | 1994-2000 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP, 3-90547, A (Toshiba Corporation),<br>16 April, 1991 (16.04.91) (Family: none) | 1-42 |
| Y | JP, 1-291408, A (Nippon Steel Corporation),<br>24 November, 1989 (24.11.89) (Family: none) | 1-42 |
| Y | JP, 60-22308, A (Mitsubishi Electric Corporation),<br>04 February, 1985 (04.02.85) (Family: none) | 1-42 |
| A | JP, 10-55416, A (Contec K.K.),<br>24 February, 1998 (24.02.98) (Family: none) | 10-42 |
| A | JP, 10-198772, A (Hitachi, Ltd.),<br>31 July, 1998 (31.07.98) (Family: none) | 10-42 |

| ☐ Further documents are listed in the continuation of Box C. | ☐ See patent family annex. |
|---|---|

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>17 April, 2000 (17.04.00) | Date of mailing of the international search report<br>02 May, 2000 (02.05.00) |
|---|---|
| Name and mailing address of the ISA/<br>Japanese Patent Office | Authorized officer |
| Facsimile No. | Telephone No. |

Form PCT/ISA/210 (second sheet) (July 1992)